# EUROPÄISCHE PATENTSCHRIFT

(11) **EP 3 069 023 B1**
(45) Veröffentlichungstag und Bekanntmachung des Hinweises auf die Patenterteilung: **22.07.2020**
(21) Anmeldenummer: 14792465.8
(22) Anmeldetag: 30.10.2014
(51) Int. Cl.: F04B 15/04, F04B 53/14, F16L 51/00, F16L 27/12

(54) **HEISSSCHLAMMPUMPE**
HOT SLUDGE PUMP
POMPE À BOUE CHAUDE

(30) Priorität: 13.11.2013 DE 102013112476
(43) Veröffentlichungstag der Anmeldung: 21.09.2016
(73) Patentinhaber: MHWirth GmbH, 41812 Erkelenz (DE)
(72) Erfinder: HURTZ, Hubert, 41812 Erkelenz (DE)
(74) Vertreter: Zacco Norway AS
(86) Internationale Anmeldenummer: PCT/EP2014/073296
(87) Internationale Veröffentlichungsnummer: WO 2015/071106

(56) Entgegenhaltungen:
- EP-A1- 0 849 065
- DE-A1- 4 012 983
- DE-A1- 4 124 290
- DE-C2- 19 782 185
- GB-A- 675 935

## Beschreibung

Die Erfindung betrifft eine Heißschlammpumpe. Mit Schlamm wird im Rahmen dieser Druckschrift insbesondere jeder Dickstoff bezeichnet, also jedes Gemisch aus flüssigen und festen Bestandteilen. Es kann sich beispielsweise um Schlamm bei Erdarbeiten oder ähnlichem handeln. Derartige Schlammpumpen sind für den Dauereinsatz konzipiert und müssen zuverlässig über lange Zeiträume bis hin zu Jahren möglichst störungsfrei arbeiten, da ein Austausch einer defekten Schlammpumpe regelmäßig mit einem erheblichen Arbeits- und Zeitaufwand verbunden ist.

Heißschlammpumpen sind bereits bekannt. Beispielsweise zeigt die DE 197 82 185 C2 eine Heißschlammpumpe. Aus dieser Druckschrift ist es bekannt, der Längenänderung der Pendelleitung beispielsweise dadurch zu begegnen, dass die Verdrängerpumpe beweglich in das System aufgenommen ist, sodass sich diese unter dem Einfluss von durch Temperaturänderungen ausgelösten Längenänderungen bewegen kann.

Die GB 675 935 A offenbart eine gleitende Rohrverbindung für Rohre in denen beispielsweise Luft einer Temperatur von 800°C strömt.

Aus der DE 40 12 983 A1 ist ein axialer Dehnungsausgleicher mit Warnanzeige bei Medienaustritt für Rohrleitungen bekannt, beispielsweise für Fernwärmeleitungen, bei dem sich gegeneinander abgedichtete Rohrabschnitte relativ zueinander bewegen.

Die EP 0 849 065 A1 offenbart einen Kompensator zum Ausgleich von durch Temperatureinflüssen hervorgerufenen Längenänderungen.

Nachteilig bei bekannten Heißschlammpumpen ist, dass sie aufwändig herzustellen sind, viel Platz beanspruchen, keine hohe Standzeit aufweisen oder wartungsintensiv sind.

Die Erfindung hat es sich zur Aufgabe gemacht, eine Heißschlammpumpe zu schaffen, die zumindest hinsichtlich eines der genannten Nachteile verbessert ist.

Die erfindungsgemäße Kolben-Membran-Heißschlammpumpe weist je Kolbenstrang mindestens eine Pendelleitung auf. In dieser Pendelleitung pendelt bevorzugt Pendelflüssigkeit hin und her und der Druck wechselt pulsierend zwischen dem Saug- und Druckniveau. Die Pendelleitung dient bevorzugt als Kühlstrecke. Die Länge der Pendelleitung kann in einer Ausführungsform etwa 5 m betragen. Die Pendelleitung kann auch eine andere Länge haben. Diese Pendelleitung dehnt sich entsprechend dem Temperaturgefälle der Pendelflüssigkeit aus, welches sich aufgrund der Kühlstrecke einstellt.

Es ist mindestens ein Dehnungsausgleicher je Pendelleitung vorgesehen, zum Ausgleich der thermischen Längenänderung der Pendelleitung. Der Dehnungsausgleicher verhindert bevorzugt, dass die Spannungen der Flanschverbindungen der Pendelleitung zu hoch werden.

Der Dehnungsausgleicher weist eine Linearführung auf.

Der Dehnungsausgleicher weist auch mindestens eine Dichtungsanordnung auf.

Die Linearführung und die mindestens eine Dichtungsanordnung sind zwischen einem mit der Pendelleitung verbindbaren oder - etwa einstückig - verbundenem, verschieblichen Bereich der Pumpe und einem ortsfesten Bereich der Pumpe vorgesehen. Dieser ortsfeste Bereich der Pumpe ist bevorzugt mit der übrigen Schlammpumpe, insbesondere dem Verdrängerraum mittelbar oder unmittelbar verbindbar oder - etwa einstückig - verbunden.

Die Begriffe "verschieblich" und "ortsfest" beziehen sich insbesondere auf den Zustand bei fertig montierter Pumpe.

Mit dem Begriff "verschieblich" ist im Rahmen dieser Druckschrift insbesondere eine Beweglichkeit im Sinne einer Verschiebung gemeint.

In einer Ausführungsform der Pumpe sind vier Pendelleitungen und vier Dehnungsausgleicher vorgesehen. Eine andere Anzahl ist möglich. Beispielsweise können auch drei Pendelleitungen und drei Dehnungsausgleicher vorgesehen sein, bei einer einfachwirkenden Triplexpumpe.

Bevorzugt weist die Pumpe mindestens einen Arbeitsraum auf. Mit dem Begriff "Arbeitsraum" ist im Rahmen dieser Druckschrift insbesondere der Raum bezeichnet, in den der Schlamm eingesaugt wird und aus dem der Schlamm hinausgedrückt wird. Jeder Arbeitsraum umfasst bevorzugt mindestens ein Ventil, bevorzugt ein Einlassventil und ein Auslassventil.

Weiter weist die Pumpe einen Verdrängerraum auf, in dem ein Verdrängerelement vorgesehen ist. Bei dem Verdrängerelement handelt es sich um eine mit Hilfe eines Kolbens betätigte Membran. Die Heißschlammpumpe umfasst also eine Kolben-Membranpumpe.

Die Pendelleitung ist bevorzugt zwischen dem Arbeitsraum und dem Verdrängerraum angeordnet und verbindet diese. Die Pendelleitung dient bevorzugt dazu, das Verdrängerelement vor den heißen Temperaturen des gepumpten Schlamms zu bewahren. Sie stellt also bevorzugt ein Temperaturgefälle zwischen dem Arbeitsraum und dem Verdrängerraum her.

Bevorzugt ist genau ein Dehnungsausgleicher mit genau einem Ende jeder Pendelleitung mittelbar oder unmittelbar verbunden. Vorzugsweise ist lediglich an genau einem Ende jeder Pendelleitung genau ein Dehnungsausgleicher vorgesehen.

Die Dichtungsanordnung umfasst bevorzugt mindestens eine - bevorzugt ringförmige - Dichtung, die eine translatorische Bewegung von Dichtflächen gegeneinander zulässt. Bevorzugt lässt sie axiale Bewegungen von zylindrischen, ineinandergreifenden Dichtflächen zu.

Der Dehnungsausgleicher ist bevorzugt von Pendelflüssigkeit durchflossen.

Vorzugsweise ist eine den Dehnungsausgleicher - genauer gesagt, das Gehäuse des Dehnungsausgleichers - mit dem Verdrängerraum verbindende Leitung, die bevorzugt von Pendelflüssigkeit durchflossen ist, vorgesehen.

Mit Vorteil umfasst die Linearführung ein Gleitlager. Die Linearführung umfasst bevorzugt ein Wirkflächenpaar, das eine Zylinderinnenfläche und eine Zylinderaußenfläche umfasst, beispielsweise eine Rohrinnenfläche und eine Rohraußenfläche.

Mit Vorteil umfasst die Dichtungsanordnung eine Buchsendichtung mit einem Dichtungspaket. Als "Buchsendichtung" wird im Rahmen dieser Druckschrift insbesondere eine Dichtung angesehen, die eine Vorrichtung umfasst, zum gezielten, veränderbaren axialen Verspannen des Dichtmaterials, um hierdurch die radiale Dicke des Dichtungsmaterials einstellen zu können. Mit dem Begriff "Dichtungspaket" wird im Rahmen dieser Druckschrift insbesondere das Dichtmaterial der Buchsendichtung bezeichnet.

In einer Ausführungsform umfasst die Buchsendichtung eine Stopfbuchsendichtung und das Dichtungspaket umfasst eine Packung.

In einer anderen Ausführungsform umfasst die Buchsendichtung eine Dachmanschettendichtung und das Dichtungspaket umfasst weiter bevorzugt einen Dachmanschettensatz. Mit einer Dachmanschettendichtung wird im Rahmen dieser Druckschrift insbesondere eine Dichtung bezeichnet, bei der das Dichtmaterial in Form von mindestens einem Profilring vorliegt, der im Querschnitt keilförmig oder dachförmig ist. Bevorzugt umfasst jeder Dachmanschettensatz mehrere, vorzugsweise zusammenwirkende, derartige Profilringe.

Mit Vorteil bewirkt der Dehnungsausgleicher eine Änderung der Hauptströmungsrichtung der Pendelflüssigkeit um etwa 90°. Der Dehnungsausgleicher kann auch eine Änderung der Hauptströmungsrichtung um einen anderen Wert bewirken. Beispielhaft genannt seien etwa 20, 40, 60, 120 oder 140°.

Vorzugsweise bildet der Dehnungsausgleicher eine von der übrigen Pumpe trennbare Einheit. Der Dehnungsausgleicher umfasst weiter bevorzugt ein ortsfestes Element, das den ortsfesten Bereich umfasst oder bildet und das mit dem Verdrängerraum mittelbar oder unmittelbar verbindbar ist. Weiter umfasst der Dehnungsausgleicher ein verschiebliches Element, das den verschieblichen Bereich umfasst oder bildet und bevorzugt mit der Pendelleitung mittelbar oder unmittelbar verbindbar ist. Das verschiebliche Element weist bevorzugt eine Längsbohrung auf, deren Durchmesser in etwa dem Innendurchmesser der Pendelleitung entspricht.

Der Dehnungsausgleicher weist ein Gehäuse auf. Das Gehäuse bildet oder umfasst bevorzugt den ortsfesten Bereich. Das Gehäuse stellt Lagermittel und Dichtmittel bereit. Mit Lagermitteln und Dichtmitteln sind insbesondere Mittel gemeint, die - ohne notwendigerweise selbst lagernde oder dichtende Wirkung zu haben - an der Lagerung und/oder Dichtung zumindest mitwirken oder eine Voraussetzung für die eigentliche Lagerung und/oder Dichtung schaffen.

Der Dehnungsausgleicher umfasst weiter das verschiebliche Element, das in sein Gehäuse eingreift. Das verschiebliche Element bildet den verschieblichen Bereich oder ist Teil des verschieblichen Bereichs.

Das verschiebliche Element ist bevorzugt schwimmend gelagert, vorzugsweise in dem Gehäuse des Dehnungsausgleichers.

Das verschiebliche Element stellt mit den Lagermitteln und Dichtmitteln mittelbar oder unmittelbar zusammenwirkende Gegenlagermittel und Gegendichtmittel bereit.

Das Gehäuse des Dehnungsausgleichers weist eine erste Bohrung auf, in die der verschiebliche Bereich hineinragt. Der verschiebliche Bereich ist bevorzugt in dieser ersten Bohrung geführt. Die Lagermittel des Gehäuses umfassen also bevorzugt die Innenfläche der ersten Bohrung des Gehäuses. Die erste Bohrung durchgreift das Gehäuse bevorzugt vollständig.

Das Gehäuse weist eine zweite Bohrung auf. Die zweite Bohrung durchgreift das Gehäuse mit Vorteil nicht vollständig, sondern reicht lediglich von einer Gehäuseaußenseite bis zu der ersten Bohrung. Die Achse der zweiten Bohrung verläuft bevorzugt in einem Winkel von etwa 90° zu der Achse der ersten Bohrung. Die zweite Bohrung ist an den Verdrängerraum angeschlossen.

Mit dem Begriff "Bohrung" ist in einer weiten Verwendung dieses Begriffs im Rahmen dieser Druckschrift sowohl eine gebohrte Öffnung, als auch jede andere Öffnung gemeint, unabhängig davon, wie sie gefertigt wurde. Alle Bohrungen des Dehnungsausgleichers können im Querschnitt eine beliebige Form aufweisen, etwa vieleckig oder elliptisch sein. Mit Vorteil sind alle Bohrungen des Dehnungsausgleichers im Querschnitt kreisförmig. Im Falle von im Querschnitt nichtkreisförmigen Bohrungen tritt anstelle des Begriffs des Durchmessers der Begriff der Abmessung.

Mit Vorteil weist das Gehäuse, vorzugsweise am freien Ende der zweiten Bohrung, einen Flansch auf.

Die Dichtmittel des Gehäuses umfassen mit Vorteil mindestens einen Bereich mit vergrößertem Innendurchmesser der ersten Bohrung. Mit Vorteil sind pro Dehnungsausgleicher zwei derartige Bereiche vorgesehen, vorzugsweise an den beiden Gehäuseaustritten der ersten Bohrung. In diesem Bereich oder diesen Bereichen ist bevorzugt jeweils ein Dichtungspaket der Buchsendichtung angeordnet. Der mindestens eine Bereich vergrößerten Innendurchmessers bildet also bevorzugt den Raum für das Dichtungspaket. Jeder Bereich vergrößerten Durchmessers grenzt bevorzugt ohne Übergang an den Bereich kleineren Durchmessers der ersten Bohrung an, so dass sich hierdurch jeweils eine Schulter ergibt, an der sich jedes Dichtungspaket abstützt.

Die erste Bohrung des Gehäuses ist mit Vorteil an ihren beiden Enden mittels der Dichtungsanordnung gegenüber dem verschieblichen Bereich abgedichtet.

Mit Vorteil ist an den beiden Gehäuseaustritten der ersten Bohrung des Gehäuses des Dehnungsausgleichers jeweils eine Buchsendichtung angeordnet.

Mit Vorteil ist - bevorzugt an beiden Gehäuseaustritten der ersten Bohrung - eine so genannte Brille vorgesehen. Diese bewirkt mit Vorteil die dichtende Wirkung des Dichtungspakets. Die Brille ist also bevorzugt eine Vorrichtung zum gezielten, veränderbaren axialen Verspannen des Dichtungsmaterials, um hierdurch die radiale Dicke des Dichtungsmaterials einstellen zu können. Die Brille umfasst mit Vorteil jeweils einen vorzugsweise mit dem Gehäuse verschraubten oder verschraubbaren Ring. Dieser Ring weist mit Vorteil einen Fortsatz auf, der auf das Dichtungspaket drückbar ist und damit eine axiale Verspannung des Dichtungspakets bewirkt. Hierdurch ist bevorzugt die radiale Dicke des Dichtungspakets bis zur gewünschten Dichtwirkung vergrößerbar. Bei neuem Dehnungsausgleicher belässt der Ring mit Vorteil einen Spalt zwischen sich und dem Gehäuse. Dieser Spalt wirkt als Nachstellspalt, der ein Nachstellen ermöglicht, wenn das Dichtungspaket Verschleiß aufweist.

Das verschiebliche Element umfasst mit Vorteil einen Führungsbereich, dessen Außendurchmesser geringfügig kleiner als der Innendurchmesser der ersten Bohrung des Gehäuses ist. Bevorzugt ist hierdurch zwischen dem verschieblichen Element und dem Gehäuse eine Spielpassung gebildet.

Bevorzugt weist das verschiebliche Element eine Längsbohrung auf, deren Durchmesser etwa dem Innendurchmesser der Pendelleitung entspricht und die weiter bevorzugt von Pendelflüssigkeit durchflossen ist.

Weiter bevorzugt weist der verschiebliche Bereich bevorzugt eine Querbohrung auf. Diese durchgreift das verschiebliche Element mit Vorteil nicht vollständig, sondern stellt lediglich eine Verbindung von der Außenseite des verschieblichen Elements zu der Längsbohrung her. Die Querbohrung steht bevorzugt in einem Winkel von 20 oder 40 oder 60 oder 120 oder 140° und ganz besonders bevorzugt etwa senkrecht zur Längsbohrung.

Die Querbohrung steht mit Vorteil etwa in Deckung mit der zweiten Bohrung des Gehäuses.

An einem Ende dieses verschieblichen Elements ist weiter bevorzugt ein Flansch angeordnet, zur Verbindung des verschieblichen Elements mit der Pendelleitung.

Das verschiebliche Element durchgreift das Gehäuse bevorzugt vollständig. Es ragt also bevorzugt an zwei Seiten aus dem Gehäuse heraus.

Dies macht es einerseits erforderlich dass, wie bevorzugt, zwei Dichtungsanordnungen pro Dehnungsausgleicher vorgesehen sind, zum Abdichten der zwei Austritte des verschieblichen Elements aus dem Gehäuse.

Bevorzugt ist zudem eine Abstützungsvorrichtung des Gehäuses nach unten vorgesehen, die eine nach unten gerichtete Kraft aufnehmen kann.

Die Gegenlagermittel und Gegendichtmittel des verschieblichen Elements umfassen bevorzugt eine Dichtfläche und eine Lagerfläche, die bevorzugt beide von - bevorzugt verschiedenen Bereichen - der Oberfläche des verschieblichen Elements gebildet sind.

Mit Vorteil weist jeder Dehnungsausgleicher zwei Dichtungsanordnung auf, die weiter bevorzugt jeweils eine Buchsendichtung mit einem Dichtungspaket umfassen. Es ist also eine doppelte Buchsendichtung vorgesehen. Der verschiebliche Bereich ist bevorzugt schwimmend in dieser doppelten Buchsendichtung in dem Gehäuse des Dehnungsausgleichers geführt und kann sich bei einer Längenänderung der Pendelleitung im Gehäuse des Dehnungsausgleichers verschieben.

Mit Vorteil weist die Querbohrung des verschieblichen Elements einen Durchmesser auf, der in etwa dem Durchmesser der Längsbohrung entspricht. Weiter bevorzugt weist die Querbohrung an einer Seite einen abgerundeten Übergang, zur Reduzierung des Strömungswiderstandes der Pendelflüssigkeit, auf.

Die Wandstärke des verschieblichen Elements, der Durchmesser seiner Querbohrung, der abgerundete Übergang der Querbohrung des verschieblichen Elements und die Form der Umlenkfläche sind bevorzugt derart aufeinander abgestimmt, dass der Dehnungsausgleicher eine knickfreie Rohrkrümmung bereitstellt.

In einer Ausführungsform weist der Dehnungsausgleicher eine hydrostatische Abstützung der Linearführung auf. Hierzu ist bevorzugt ein mit Pendellflüssigkeit gefüllter Ringraum mit einer Flächenverteilung derart vorgesehen, dass auf den verschieblichen Bereich bzw. das verschiebliche Element eine entgegen einer von der Linearführung aufzunehmenden Kraftkomponente gerichtete Kraft bewirkt ist.

Das verschiebliche Element hat bevorzugt eine rotationssymmetrische Form.

Die Längsbohrung des verschieblichen Elements kann durchgehend sein, das verschiebliche Element kann also ein Schubrohr umfassen. An genau einem Ende dieses Schubrohrs ist dann bevorzugt ein Verschluss angeordnet, der das Schubrohr dicht abschließt. Mit Vorteil weist der Verschluss des Schubrohrs im Inneren desselben einen Fortsatz auf, der eine strömungsgünstige Umlenkung der Pendelflüssigkeit bewirkt, indem er bevorzugt eine konkave Umlenkfläche bereitstellt.

Die Längsbohrung des verschieblichen Elements kann auch als Sacklochbohrung ausgeführt sein. Das verschiebliche Element kann dann aus einem Stück, also Vollmaterial, gefertigt sein.

Die erste Bohrung des Gehäuses kann durch die Innenseite eines ersten Rohrs oder eines ersten rohrförmigen Bereichs des Gehäuses gebildet sein. Die zweite Bohrung des Gehäuses kann durch die Innenseite eines zweiten Rohrs oder eines zweiten rohrförmigen Bereich gebildet sein. Das Gehäuse des Dehnungsausgleichers kann dann die Form eines Rohr-T-Stücks haben.

In einer anderen Ausführungsform hat das Gehäuse eine quaderförmige Außenkontur. Die erste und die zweite Bohrung können dann jeweils senkrecht zu einer Außenfläche des Gehäuses angeordnet sein. Die Gehäusefläche, aus der die zweite Bohrung des Gehäuses austritt kann einen Flansch bilden und beispielsweise mit Flanschgewindebohrungen ausgestattet sein

Mit Vorteil ist eine Pendelleitungsverlagerungsvorrichtung vorgesehen, um die Pendelleitung zu Wartungszwecken zu verlagern. Diese greift bevorzugt an dem verschieblichen Element an. Die Pendelleitungsverlagerungsvorrichtung bewirkt, wenn die Pumpe gewartet, also etwa eine Flanschverbindung der Pendelleitung gelöst werden und ein Teil der Pendelleitung ausgetauscht werden soll, bevorzugt Zugkräfte auf das verschiebliche Element. Der Dehnungsausgleicher verringert in dieser Ausführungsform nicht nur auftretende Spannungen, sondern schafft eine Voraussetzung für eine Wartungserleichterung.

Die Erfindung betrifft auch einen Dehnungsausgleicher einer Pumpe mit den Merkmalen nach einem der Ansprüche 1 bis 11.

Die Erfindung soll nun anhand von in den Zeichnungen gezeigten Ausführungsbeispielen näher erläutert werden. Es zeigen:
- Fig. 1: eine schematische Prinzip-Querschnittsdarstellung eines Ausführungsbeispiels einer erfindungsgemäßen Pumpe;
- Fig. 2: ein Detail aus Fig. 1 in vergrößertem Maßstab;
- Fig. 3: eine perspektivische Prinzipdarstellung eines weiteren Ausführungsbeispiels;
- Fig. 4: ein Detail aus Fig. 3;
- Fig. 5: eine Ansicht von vorne auf ein erstes Ausführungsbeispiel eines Dehnungsausgleichers;
- Fig. 6: eine Querschnitts-Seitendarstellung des in Fig. 5 gezeigten Dehnungsausgleichers;
- Fig. 7: eine Darstellung des Details VII aus Fig. 6;
- Fig. 8: eine Ansicht von oben auf den in Fig. 5 gezeigten Dehnungsausgleicher;
- Fig. 9: eine perspektivische Darstellung des in Fig. 5 gezeigten Dehnungsausgleichers;
- Fig. 10: eine Ansicht von vorne auf ein zweites Ausführungsbeispiel eines Dehnungsausgleichers;
- Fig. 11: eine Querschnitts-Seitendarstellung des in Fig. 10 gezeigten Dehnungsausgleichers;
- Fig. 12: eine perspektivische Darstellung des in Fig. 10 gezeigten Dehnungsausgleichers.

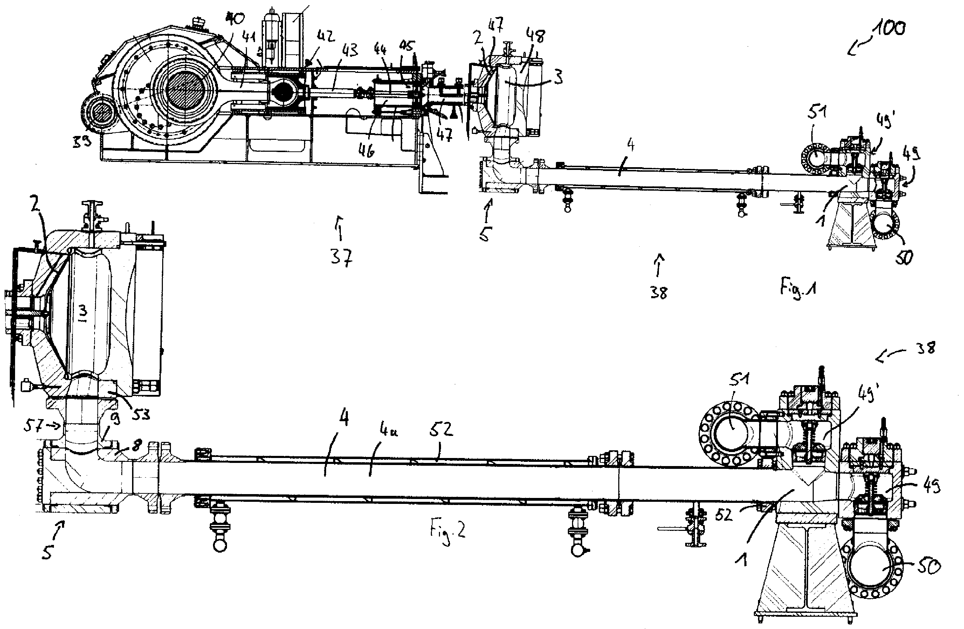

In Fig. 1 ist mit 100 ein erstes Ausführungsbeispiel einer Pumpe prinzipiell dargestellt.

Die Pumpe weist eine Antriebseinheit 37 und eine Pumpeinheit 38 auf. Die Antriebseinheit 37 umfasst eine Antriebswelle 39, die durch einen nicht gezeigten Motor, beispielsweise einen Elektromotor, in Drehung versetzt wird. Auf der Antriebswelle 39 ist mindestens ein lediglich angedeutetes Zahnrad angeordnet, welches mit mindestens einem wesentlich größeren, ebenfalls lediglich angedeuteten Zahnrad der Kurbelwelle 40 kämmt. Anders als dargestellt, kann die Kurbelwelle auch direkt angetrieben sein. Die Antriebswelle 39 kann auf beiden Seiten aus dem Gehäuse der Antriebseinheit hervorstehen. Auf der Kurbelwelle ist ein Pleuel 41 angeordnet. Das Pleuel ist mit Hilfe eines Pleuellagers an der Kurbelwelle gelagert. Das Pleuel überträgt seine Bewegung mittels eines Kreuzkopfes 42 auf eine Kreuzkopfstange 43, die in die Kolbenstange 44 übergeht. An der Kolbenstange ist ein Arbeitsmediums-Kolben 45 angeordnet, der in einem Arbeitsmediums-Zylinder 46 eine gradlinige oszillierende Bewegung ausführt. An der Antriebseinheit 37 ist eine Pumpeinheit 38 vorgesehen. Diese stellt einen an den Arbeitsmediums-Zylinder angrenzenden Arbeitsmediumsraum bereit, in dem Arbeitsmedium 47, beispielsweise Hydrauliköl, vorgesehen ist, welches die Bewegung des Arbeitsmediums-Kolbens auf ein Verdrängerelement 2, welches als Flachmembran 47 ausgebildet ist, überträgt. Die Flachmembran 47 bildet zusammen mit einem Teil des Membrangehäuses 48 einen Verdrängerraum 3. Die Pumpeinheit 38 weist zudem einen Arbeitsraum 1 auf, der von zu pumpenden Medium durchströmt wird. Der Arbeitsraum 1 ist mit einer Zuführleitung 50 über ein Rückschlagventil 49 wirkverbunden. Der Arbeitsraum 1 ist über ein weiteres Rückschlagventil 49' mit einer Ausgangsleitung 41 wirkverbunden. An den Arbeitsraum 1 grenzt zudem eine Pendelleitung 4 an, die den Arbeitsraum 1 mit dem Verdrängerraum 3 wirkverbindet. Die Pendelleitung 4 dient dazu, die Membran 2 mit einer deutlich geringeren Temperatur zu belasten, als sie das zu pumpende Medium aufweist. Bei dem zu pumpenden Medium kann es sich um Nickelschlamm handeln, der beispielsweise eine Temperatur von etwa 220° C aufweisen kann. Die Pendelleitung 4 kann einen Wärmetauscher 52 aufweisen, der den kühlenden Effekt der Pendelleitung verstärkt.

Um die durch die thermische Längenänderung der Pendelleitung 4 beispielsweise bei Inbetriebnahme der Pumpe zwischen dem Arbeitsraumflansch 52 und dem Verdrängerraumflansch 53 bewirkten Kräfte auf ein unschädliches Maß zu reduzieren, ist zwischen der Pendelleitung 4 und dem Verdrängerraum 3 ein Dehnungsausgleicher 5 angeordnet.

Die in Fig. 1 und 2 gezeigte Pumpe 100 ist einfachwirkend. Es können mehrere Pleuel 41 und Arbeitsmediums-Kolben 45, etwa drei, nebeneinander angeordnet sein. Es kann sich also um eine einfachwirkende Triplexpumpe handeln.

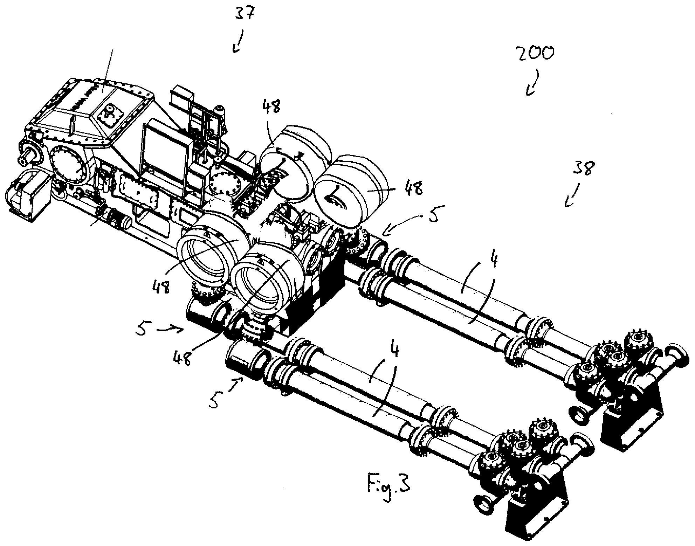

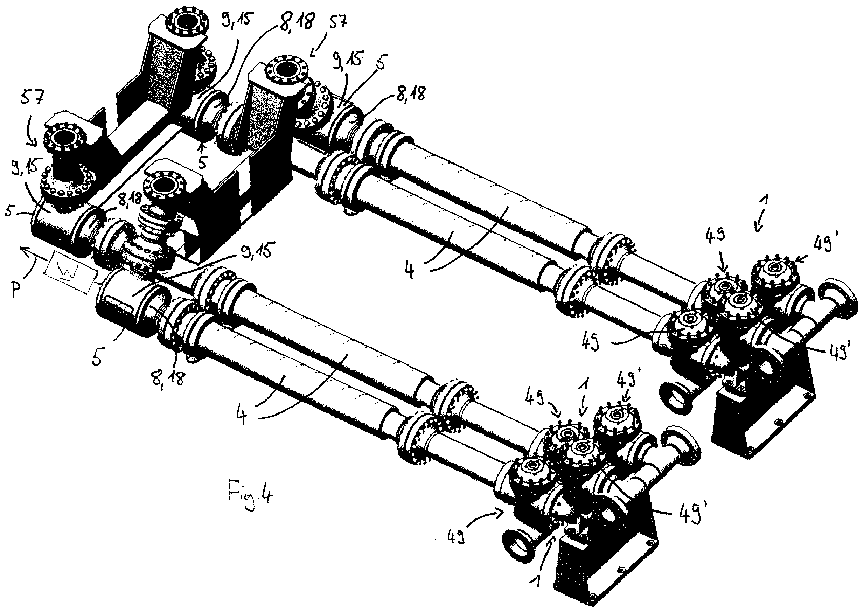

Bei dem in Fig. 3 gezeigten Ausführungsbeispiel einer Pumpe 200 sind zwei Pleuel und Kolbenstangen nebeneinander angeordnet und die Pumpe 200 ist doppeltwirkend. Es handelt sich also um eine doppeltwirkende Duplexpumpe mit vier Membrangehäusen 48. Wie insbesondere Fig. 4 zeigt, weist sie vier Pendelleitungen 4 auf. Jede Pendelleitung weist einen Dehnungsausgleicher 5 auf. Es sind vier Arbeitsräume 1 vorhanden. Jeder Arbeitsraum 1 weist zwei Ventile 49, 49' auf. Die Heißschlammpumpe kann auch einen anderen Pumpentyp umfassen, etwa eine Triplexpumpe.

Es kann eine Pendelleitungsverlagerungsvorrichtung W in Form einer Zugvorrichtung an jeder Pendelleitung vorgesehen sein, die zu Wartungszwecken eine Zugkraft auf den verschieblichen Bereich in Richtung des Pfeils P ausüben kann (Fig. 4). Die Pendelleitung kann unterstützt sein. Auf diese Weise wird der Austausch von Teilen der Pendelleitung vereinfacht.

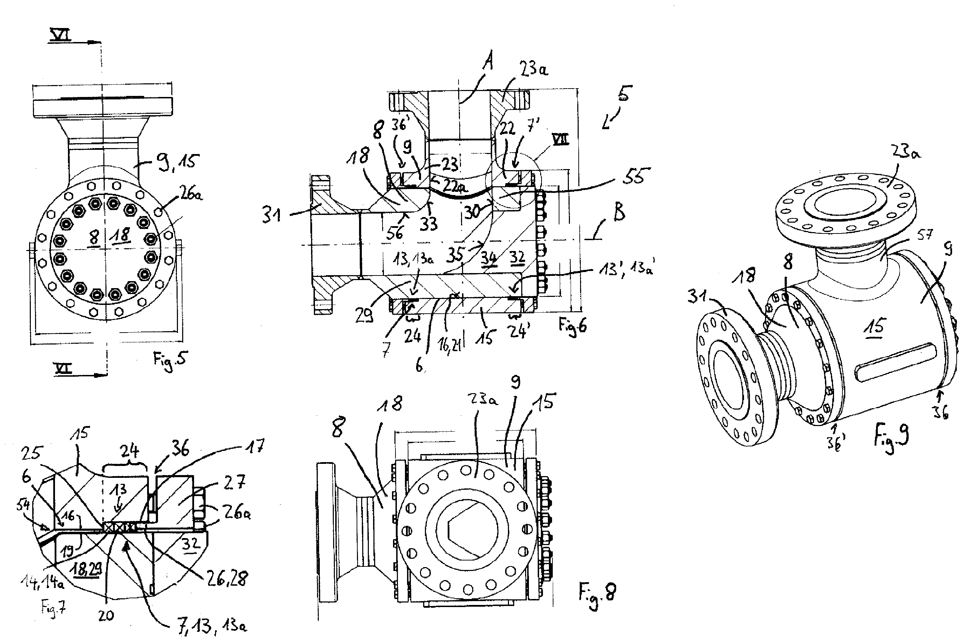

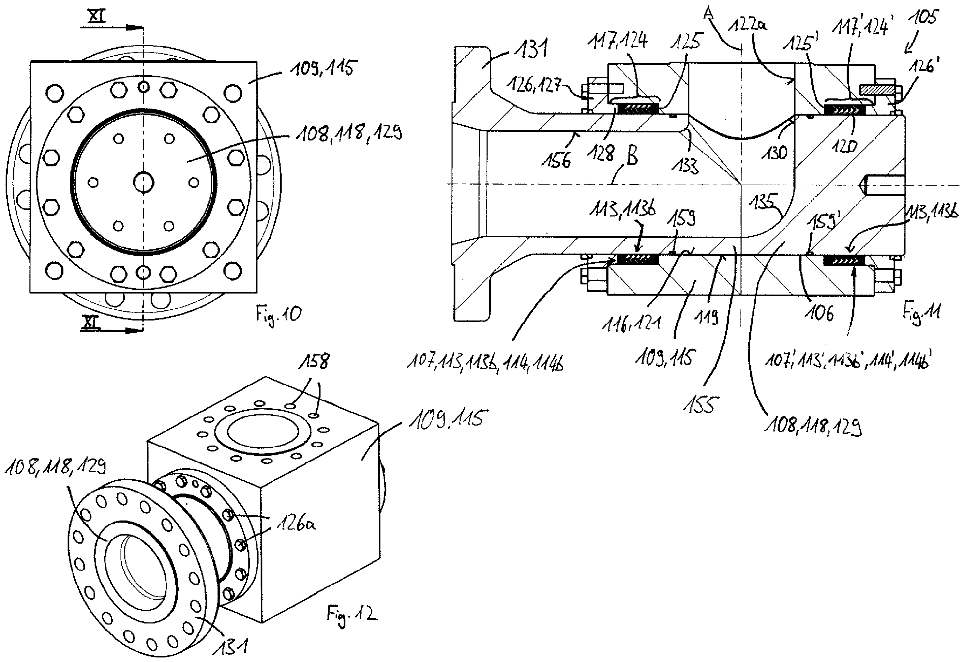

Der Dehnungsausgleicher 5 des in Fig. 1 und 2 gezeigten Ausführungsbeispiels der Pumpe 100 kann die gleiche Form und Größe wie der Dehnungsausgleicher 5 des in den Fig. 3 und 4 gezeigten Ausführungsbeispiels der Pumpe 200 aufweisen. In beiden gezeigten Ausführungsbeispielen der Pumpe 100, 200, kann anstelle des in den Fig. 5 bis 8 gezeigten Ausführungsbeispiels des Dehnungsausgleichers 5 das in den Fig. 10 bis 12 gezeigte Ausführungsbeispiel des Dehnungsausgleichers 105 vorgesehen sein.

Die folgenden Ausführungen beziehen sich auf beide gezeigten Ausführungsbeispiele der Dehnungsausgleicher 5, 105:
Der Dehnungsausgleicher 5, 105 weist eine Linearführung 6, 106 auf. Diese Linearführung 6, 106 ist zwischen einem mit der Pendelleitung verbundenem verschieblichen Bereich 8, 108 der Pumpe 100, 200 und einem ortsfesten Bereich 9, 109 der Pumpe 100, 200 ausgestaltet.
Der ortsfeste Bereich 9, 109 der Pumpe 100, 200 ist durch das Gehäuse 15, 115 des Dehnungsausgleichers 5, 105 gebildet. Der verschiebliche Bereich 8, 108 der Pumpe 100, 200 ist durch ein verschiebliches Element 18, 118 des Dehnungsausgleichers 5, 105 gebildet.
Das Gehäuse 15, 115 weist eine erste Bohrung 21, 121 auf, in der das verschiebliche Element 18, 118 durch die Linearführung 6, 106 geführt ist. Die Linearführung 6, 106 wird durch das Wirkflächenpaar Außenfläche des Führungsbereichs 55, 155 des verschieblichen Elements 18, 118 und Innenfläche der ersten Bohrung 21, 121 der Gehäuse 15, 115 gebildet.
Das Gehäuse 15, 115 weist eine zweite Bohrung 22a, 122a auf. Die Achse A der zweiten Bohrung 22a, 122a verläuft in einem Winkel von etwa 90° zu der Achse B der ersten Bohrung 21, 121.
Das Gehäuse 15, 115 des Dehnungsausgleichers 5, 105 stellt Lagermittel 16, 116 und Dichtmittel 17, 117 bereit. Die Dichtmittel 17, 117, 117' des Gehäuses 15, 115 umfassen zwei endseitige Bereiche 24, 124, 124' der ersten Bohrung 21, 121 des Gehäuses, die gegenüber der übrigen ersten Bohrung 21, 121 einen vergrößerten Innendurchmesser aufweisen. Die Lagermittel 16, 116 des Gehäuses 15, 115 umfassen die Innenfläche der ersten Bohrung 21, 121 des Gehäuses außerhalb der Bereiche vergrößerten Innendurchmessers oder sind hierdurch gebildet.

Jeder Dehnungsausgleicher umfasst zwei Dichtungsanordnungen 7, 7', 107, 107', die jeweils durch eine Buchsendichtung 13, 13', 113, 113' mit einem Dichtungspaket 14, 114, 114' gebildet sind.

Das verschiebliche Element 18, 118 ist schwimmend in einer doppelten Buchsendichtung 13, 13', 113, 113' in dem Gehäuse 15, 115 des Dehnungsausgleichers 5, 105 geführt und kann sich bei einer Längenänderung der Pendelleitung 4 im Gehäuse 15, 115 des Dehnungsausgleichers 5, 105 verschieben.

Die Bereiche 24, 24' mit vergrößertem Innendurchmesser der ersten Bohrung 21, 121 des Gehäuses 15, 115 des Dehnungsausgleichers 5, 105 stellen den Raum für das Dichtungspaket 14, 114, 114' bereit.

Das Gegenlagermittel 19, 119 und das Gegendichtmittel 20, 120 des verschieblichen Elements 18, 118 sind durch verschiedene Bereiche der Oberfläche des verschieblichen Elements 18, 118 gebildet. Diese stellt eine mit dem Dichtungspaket 14, 114, 114' zusammenwirkende Gegendichtfläche und eine mit der Innenfläche der ersten Bohrung 21, 121 des Gehäuses zusammenwirkende Gegenlagerfläche bereit.

Jedes der beiden Dichtungspakete 14, 114, 114' des Dehnungsausgleichers 5, 105 stützt sich jeweils an einer Schulter 25, 125, 125' des Gehäuses 15, 115 ab, die durch das übergangslose Angrenzen jedes Bereichs vergrößerten Durchmessers 24, 124, 124' an den Bereich kleineren Durchmessers der ersten Bohrung 21, 121 gebildet ist. Gegen diese Schulter 25, 125, 125' ist jedes Dichtungspaket 14, 114, 114' von einer so genannten Brille 26, 126, 126' gedrückt, die einen Ring 27, 127 sowie einen Fortsatz 28, 128 umfasst. Jedes Dichtungspaket 14, 114 ist also zwischen einer Schulter und einem Fortsatz der Brille eingespannt. Der Druck der Brille auf die Packung kann mittels Schrauben 26a, 126a eingestellt und bei Verschleiß des Dichtungspakets 14, 114, 114' nachgestellt werden. Zu diesem Zweck ist jeder der beiden Ringe des Dehnungsausgleichers 5, 105 so zu dem Gehäuse beabstandet, dass sich zwischen jedem Ring 27, 127 und dem Gehäuseaustritt der ersten Bohrung 21, 121 ein Nachstellspalt 36, 36' bildet (in Fig. 11 und 12 nicht gezeigt). Mit Hilfe der Brille kann also das Dichtungspaket gezielt und veränderbaren axial zwischen Schulter 25, 125 und Fortsatz 28, 128 verspannt werden, um hierdurch die radiale Dicke des Dichtungspakets 14, 114, 114' und damit insbesondere die Dichtwirkung, einzustellen.

Das verschiebliche Element 18, 118 weist eine Längsbohrung 56, 156 sowie eine Querbohrung 30, 130 auf, sowie einen Flansch 31, 131.

Die Querbohrung 30, 130 deckt sich mit der zweiten Bohrung 22a, 122a des Gehäuses, so dass Pendelflüssigkeit 4a durch die Querbohrung 30, 130 in die zweite Bohrung des Gehäuses fließen kann und umgekehrt.

Zur Strömungsoptimierung weist die Querbohrung 30, 130 des verschieblichen Bereichs einen abgerundeten Übergang 33, 133 auf und es ist eine konkave Umlenkfläche 35, 135 bereitgestellt.

Das Dichtungspaket 14, 114 dichtet das verschiebliche Element 18, 118 gegen das Gehäuse 15, 115 des Dehnungsausgleichers ab.

In dem Dehnungsausgleicher wird eine Änderung der Hauptströmungsrichtung der Pendelflüssigkeit 4a um etwa 90° bewirkt. Die hierfür erforderliche Krümmung wird von dem verschieblichen Element 18, 118 gebildet. Da dieses verschiebliche Element 18, 118 fest mit der Pendelleitung 4 verbunden ist, wirken die hierbei parallel zur Pendelleitung entstehenden Kräfte nicht auf den Flansch 53 des Verdrängerraums 3. Die hierbei entstehenden Kräfte in Richtung der Achse A der zweiten Bohrung 22a des Gehäuses können von der Linearführung 6, 106 einerseits und dem Verdrängerraumflansch 53 andererseits gut aufgenommen werden. Zudem werden sie durch eine Abstützung des Gehäuses 15, 115 (in den Figuren nicht gezeigt) aufgenommen.

In dem Ringraum zwischen der ersten Bohrung 21, 121 des Gehäuses und dem Führungsbereich 55, 155 des verschieblichen Elements 18, 118 befindet sich zwischen den Dichtungsanordnungen 7, 7', 107, 107' während des Druckhubes der Pumpe unter Druck stehende Pendelflüssigkeit. Der Ringraum ist in der oberen Hälfte durch die Querbohrung 30, 130 des verschieblichen Elements und die zweite Bohrung 22a, 122a des Gehäuses unterbrochen, weist in seinem oberen Bereich also eine geringere Fläche auf. Daher bewirkt die in dem Ringraum befindliche Pendelflüssigkeit während des Druckhubs der Pumpe eine hydrostatische Abstützung des verschieblichen Elements, die entgegen der durch die Umlenkung bzw. Krümmung der Pendelflüssigkeitsleitung hervorgerufene Kraft wirkt und die Reibung der Linearlagerung während des Druckhubs verringert. Während des Saughubs ist diese Reibung ohnehin gering, da dann nur sehr geringe Kräfte zwischen dem Gehäuse und dem Schubrohr wirken. Diese geringe Reibung der Linearlagerung ermöglicht eine den Verdrängerraumflansch besonders wenig belastende Kompensation der thermischen Längenänderung der Pendelleitung.

Die folgenden Ausführungen betreffen das in den Fig. 5 bis 9 gezeigt Ausführungsbeispiel des Dehnungsausgleichers 5:
In diesem Ausführungsbeispiel ist jede der beiden Dichtungsanordnungen 7, 7' durch eine Buchsendichtung 13, 13' gebildet, die als Stopfbuchsendichtung 13a, 13a' mit einer Packung 14 ausgeführt ist.

Der Spalt 54 zwischen verschieblichem Element 18 und Gehäuse 15 ist in Fig. 7 zur Verdeutlichung vergrößert dargestellt.

Die Längsbohrung 56 des verschieblichen Elements ist in diesem Ausführungsbeispiel durchgehend ausgeführt. Das verschiebliche Element kann in diesem Ausführungsbeispiel also als Schubrohr 29 bezeichnet werden. Dieses Schubrohr 29 ist auf der dem Flansch 31 gegenüberliegenden Seite mittels eines Verschlusses 32 dicht verschlossen. Der Verschluss 32 des Schubrohrs weist einen Fortsatz 34 auf, der die konkave Umlenkfläche 35 bereitstellt.

Es ist denkbar, dass das Gehäuse ein erstes Rohr umfasst, das mit einem zweiten Rohr verbunden, etwa verschweißt wurde. Bevorzugt ist der erste und zweite rohrförmige Bereich 21, 23 des Gehäuses und ganz besonders bevorzugt das gesamte Gehäuse 15 jedoch aus einem Stück gefertigt. Das Gehäuse des Dehnungsausgleichers hat in diesem Ausführungsbeispiel die Form eines Rohr-T-Stücks. Die Wandstärke des verschieblichen Elements 18, der Durchmesser seiner Querbohrung 30, der abgerundete Übergang 33 und der Fortsatz 34 des Verschlusses 32 sind, wie insbesondere Fig. 6 zeigt, derart aufeinander abgestimmt, dass der Dehnungsausgleicher 5 eine strömungsgünstige, knickfreie Rohrkrümmung bereitstellt.

Die folgenden Ausführungen betreffen das in den Fig. 10 bis 12 gezeigte zweite Ausführungsbeispiel des Dehnungsausgleichers 105. Zur Vermeidung von Wiederholungen wird lediglich auf die Unterschiede zum ersten Ausführungsbeispiel des Dehnungsausgleichers eingegangen:
In diesem Ausführungsbeispiel ist jede der beiden Dichtungsanordnungen 107, 107' durch eine Buchsendichtung 113, 113' gebildet, die als Dachmanschettendichtung 113b, 113b' mit einem Dachmanschettensatz 114b, 114b' ausgeführt ist. Jede Dichtungsanordnung umfasst zusätzlich zu der Dachmanschettendichtung eine O-Ringdichtung 159, 159'.

In diesem Ausführungsbeispiel hat das Gehäuse 115 eine quaderförmige Außenkontur. Die erste und die zweite Bohrung 121, 122a sind jeweils senkrecht zu der Außenfläche des Gehäuses angeordnet, durch die sie aus dem Gehäuse austreten. Die Gehäusefläche, aus der die zweite Bohrung des Gehäuses austritt, bildet einen Flansch und ist mit Flanschgewindebohrungen 158 ausgestattet.

Die Längsbohrung 156 des verschieblichen Elements ist in diesem Ausführungsbeispiel als Sacklochbohrung ausgeführt. Das verschiebliche Element ist aus einem Stück gefertigt.

### Bezugszeichenliste:

- 100, 200: Heißschlammpumpe
- 1: Arbeitsraum
- 2: Verdrängerelement
- 3: Verdrängerraum
- 4: Pendelleitung
- 4a: Pendelflüssigkeit
- 5, 105: Dehnungsausgleicher
- 6, 106: Linearführung
- 7, 7': Dichtungsanordnung
- 8, 108: verschieblicher Bereich der Pumpe
- 9, 109: ortsfester Bereich der Pumpe
- 10, 11, 12: -
- 13, 13', 113, 113': Buchsendichtung
- 13a, 13a': Stopfbuchsendichtung
- 113b, 113b': Dachmanschettendichtung
- 14, 114: Dichtungspaket
- 14a: Packung
- 114b, 114b': Dachmanschettensatz
- 15, 115: Gehäuse des Dehnungsausgleichers
- 16, 116: Lagermittel
- 17, 117, 117': Dichtmittel
- 18, 118: verschiebliches Element
- 19, 119: Gegenlagermittel
- 20, 120: Gegendichtmittel
- 21, 121: erste Bohrung des Gehäuses
- 22: Wand der ersten Bohrung
- 22a: zweite Bohrung des Gehäuses
- 23: -
- 23a: Flansch des Gehäuses
- 24, 124, 124': Bereiche mit vergrößertem Innendurchmesser des ersten rohrförmigen Bereichs
- 25, 25': Schultern
- 26, 126, 126': Brille
- 26a, 126a: Schrauben der Brille
- 27: Ring der Brille
- 28: Fortsatz der Brille
- 29, 129: Schubrohr
- 30, 130: Querbohrung des verschieblichen Elements
- 31, 131: Flansch des verschieblichen Elements
- 32: Verschluss des Schubrohrs
- 33, 133: abgerundeter Übergang der Querbohrung
- 34: Fortsatz des Verschlusses
- 35, 135: konkave Umlenkfläche
- 36: Nachstell-Spalt
- 37: Antriebseinheit
- 38: Pumpeinheit
- 39: Antriebswelle
- 40: Kurbelwelle
- 41: Pleuel
- 42: Kreuzkopf
- 43: Kreuzkopfstange
- 44: Kolbenstange
- 45: Arbeitsmediums-Kolben
- 46: Arbeitsmediums-Zylinder
- 47: Flachmembran
- 48: Membrangehäuse
- 49, 49': Rückschlagventile
- 50: Eingangsleitung
- 51: Ausgangsleitung
- 52: Arbeitsraumflansch
- 53: Verdrängerraumflansch
- 54: Spalt zwischen verschieblichem Element und Gehäuse
- 55, 155: Führungsbereich des verschieblichen Elements
- 56, 156: Längsbohrung des verschieblichen Elements
- 57: das Gehäuse mit dem Verdrängerraum verbindende Leitung
- 158: Flanschgewindebohrungen
- 159, 159': O-Ringdichtungen

- A: Achse der zweiten Bohrung
- B: Achse der ersten Bohrung
- W: Pendelleitungsverlagerungsvorrichtung
- P: Pfeil

## Patentansprüche

1. Kolben-Membran-Heißschlammpumpe (100, 200) mit mindestens einer Pendelleitung (4),
einem Verdrängerraum (3), in dem eine mit Hilfe eines Kolbens (45) betätigte Membran (47) als Verdrängerelement angeordnet ist,
und mindestens einem Dehnungsausgleicher (5, 105) zum Ausgleich der thermischen Längenänderung der Pendelleitung (4), **dadurch gekennzeichnet, dass**
der Dehnungsausgleicher (5, 105) eine Linearführung (6, 106) sowie mindestens eine Dichtungsanordnung (7, 7', 107, 107') zwischen mindestens einem mit einer Pendelleitung (4) verbindbaren oder verbundenem verschieblichen Element (8, 108) der Pumpe (100, 200) und mindestens einem ortsfesten Bereich (9, 109) der Pumpe (100, 200) aufweist,
der Dehnungsausgleicher (5, 105) ein Gehäuse (15, 115) aufweist, das Lagermittel (16, 116) und Dichtmittel (17, 117) bereitstellt,
der Dehnungsausgleicher (5, 105) das verschiebliche Element (18, 118) aufweist, das in das Gehäuse (15, 115) eingreift und mit den Lagermitteln (16, 116) und Dichtmitteln (17, 117) zusammenwirkende Gegenlagermittel (19, 119) und Gegendichtmittel (20, 120) bereitstellt,
das Gehäuse (15, 115) eine erste Bohrung (21, 121), in die das verschiebliche Element (8, 108) hineinreicht, und eine zweite Bohrung (22a, 122a), die von der Gehäuseaußenseite bis zu der ersten Bohrung (21, 121) reicht, aufweist, die Achse (A) der zweiten Bohrung (22a, 122a) in einem Winkel von etwa 90° zu der Achse (B) der ersten Bohrung (21, 121) verläuft, und
die zweite Bohrung (22a, 122a) an den Verdrängerraum (3) angeschlossen ist.

2. Pumpe nach Anspruch 1, **dadurch gekennzeichnet, dass** jede Dichtungsanordnung (7, 7', 107, 107') eine Buchsendichtung (13, 13', 113, 113') mit einem Dichtungspaket (14, 114, 114') umfasst.

3. Pumpe nach Anspruch 2, **dadurch gekennzeichnet, dass** die Buchsendichtung (13) eine Stopfbuchsendichtung (13a) mit einer Packung (14a) umfasst.

4. Pumpe nach Anspruch 2, **dadurch gekennzeichnet, dass** die Buchsendichtung (113, 113') eine Dachmanschettendichtung (113b, 113b') mit einem Dachmanschettensatz (114b, 114b') umfasst.

5. Pumpe nach einem der Ansprüche 1 bis 4, **dadurch gekennzeichnet, dass** der Dehnungsausgleicher (5, 105) eine Änderung der Hauptströmungsrichtung der Pendelflüssigkeit (4a) um etwa 90° bewirkt.

6. Pumpe nach einem der Ansprüche 1 bis 5, **dadurch gekennzeichnet, dass** jede Dichtungsanordnung (7, 7', 107, 107') eine Buchsendichtung (13, 13', 113, 113') mit einem Dichtungspaket (14, 114, 114') umfasst und die Dichtmittel (17, 117, 117') mindestens einen Bereich (24, 124, 124') mit vergrößertem Innendurchmesser der ersten Bohrung (21, 121) umfassen, in dem das Dichtungspaket (14, 114, 114') angeordnet ist und dessen Ende jeweils eine Schulter (25, 125, 125') für das Dichtungspaket (14, 114, 114') bereitstellt.

7. Pumpe nach einem der Ansprüche 1 bis 6, **dadurch gekennzeichnet, dass** das verschiebliche Element (18, 118) einen Führungsbereich (55, 155) aufweist, dessen Außendurchmesser geringfügig kleiner, als der Innendurchmesser der ersten Bohrung (21, 121) ist und eine Längsbohrung (56, 156), sowie eine Querbohrung (30, 130) und die Querbohrung (30, 130) in Deckung mit der zweiten Bohrung (22a, 122a) des Gehäuses steht.

8. Pumpe nach einem der Ansprüche 1 bis 7, **dadurch gekennzeichnet, dass** zwei Dichtungsanordnung (7, 7', 107, 107') vorgesehen sind, die jeweils eine Buchsendichtung (13, 13', 113, 113') mit einem Dichtungspaket (14, 114, 114') umfassen und das verschiebliche Element (8, 108) schwimmend in dieser doppelten Buchsendichtung (13, 113, 113') in dem Dehnungsausgleicher (5, 105) geführt ist.

9. Pumpe nach einem der Ansprüche 1 bis 8, **dadurch gekennzeichnet, dass** eine Pendelleitungsverlagerungsvorrichtung vorgesehen ist, um die Pendelleitung zu Wartungszwecken zu verlagern.

## Claims

1. A piston-membrane hot sludge pump (100, 200) having at least one pendulum line (4),
a displacement chamber (3), in which a membrane (47) activated by means of a piston (45) is arranged as a displacement element,
and at least one expansion compensator (5, 105) for compensating the thermal change in length of the pendulum line (4), **characterized in that** the expansion compensator (5, 105) has a linear guide (6, 106) and at least one sealing arrangement (7, 7', 107, 107')
between at least one displaceable element (8, 108) of the pump (100, 200), the displaceable element being connectable or being connected to a pendulum line (4), and at least one stationary area (9, 109) of the pump (100, 200),
the expansion compensator (5, 105) has a housing (15, 115) which provides bearing means (16, 116) and sealing means (17, 117),
the expansion compensator (5, 105) has the displaceable element (18, 118) which engages in the housing (15, 115) and provides counter-bearing means (19, 119) and counter-sealing means (20, 120) interacting with the bearing means (16, 116) and sealing means (17, 117),
the housing (15, 115) has a first bore (21, 121), into which the displaceable element (8, 108) extends, and a second bore (22a, 122a), which extends from the outer side of the housing to the first bore (21, 121),
the axis (A) of the second bore (22a, 122a) runs at an angle of about 90° to the axis (B) of the first bore (21, 121), and
the second bore (22a, 122a) is associated with the displacement chamber (3).

2. The pump according to claim 1, **characterized in that** each sealing arrangement (7, 7', 107, 107') comprises a bushing seal (13, 13', 113, 113') having a seal package (14, 114, 114').

3. The pump according to claim 2, **characterized in that** the bushing seal (13) comprises a packing gland seal (13a) having a gasket (14a).

4. The pump according to claim 2, **characterized in that** the bushing seal (113, 113') comprises a roof collar seal (113b, 113b') having a roof collar set (114b, 114b').

5. The pump according to any one of claims 1 to 4, **characterized in that** the expansion compensator (5, 105) causes a change of the main flow direction of the pendulum liquid (4a) by approximately 90 °.

6. The pump according to any one of claims 1 to 5, **characterized in that** each sealing arrangement (7, 7', 107, 107') comprises a bushing seal (13, 13', 113, 113') having a seal package (14, 114, 114') and the sealing means (17, 117, 117') comprise at least one area (24, 124, 124') having an enlarged inner diameter of the first bore (21, 121) in which the seal package (14, 114, 114') is arranged and the end of which provides, in each case, a shoulder (25, 125, 125') for the seal package (14, 114, 114').

7. The pump according to any one of claims 1 to 6, **characterized in that** the displaceable element (18, 118) has a guiding area (55, 155), the outer diameter of which is slightly smaller than the inner diameter of the first bore (21, 121) and a longitudinal bore (56, 156) as well as a transverse bore (30, 130) and the transverse bore (30, 130) is aligned with the second bore (22a, 122a) of the housing.

8. The pump according to any one of claims 1 to 7, **characterized in that** two sealing arrangements (7, 7', 107, 107') are provided, which each comprise a bushing seal (13, 13', 113, 113') having a seal package (14, 114, 114'), and the displaceable element (8, 108) is guided in such a way, that it floats in this double bushing seal (13, 113, 113') in the expansion compensator (5, 105).

9. The pump according to any one of claims 1 to 8, **characterized in that** a pendulum line displacement device is provided in order to relocate the pendulum line for maintenance purposes.

## Revendications

1. Pompe à boue chaude et à membrane de piston (100, 200) avec au moins une ligne pendulaire (4),
une chambre de déplacement (3), dans laquelle une membrane (47) activée au moyen d'un piston (45) est disposée en tant qu'élément de déplacement, et au moins un compensateur de dilatation (5, 105) pour compenser le changement thermique de longueur de la ligne pendulaire (4), **caractérisée en ce que**
le compensateur de dilatation (5, 105) présente un guide linéaire (6, 106) ainsi qu'au moins un dispositif d'étanchéité (7, 7', 107, 107') entre au moins un élément déplaçable (8, 108) de la pompe (100, 200) pouvant être raccordé ou étant raccordé à une ligne pendulaire (4) et au moins une zone stationnaire (9, 109) de la pompe (100, 200),
le compensateur de dilatation (5, 105) présente un boîtier (15, 115) qui fournit des moyens d'appui (16, 116) et des moyens d'étanchéité (17, 117),
le compensateur de dilatation (5, 105) comporte l'élément déplaçable (18, 118) qui s'engage dans le boîtier (15, 115) et fournit des moyens de contre-appui (19, 119) et des moyens de contre-étanchéité (17, 117) coopérant avec les moyens d'appui (16, 116) et les moyens d'étanchéité (20, 120),
le boîtier (15, 115) présente un premier alésage (21, 121) dans lequel s'étend l'élément déplaçable (8, 108), et un deuxième alésage (22a, 122a) qui s'étend depuis l'extérieur du boîtier jusqu'au premier alésage (21, 121),
l'axe (A) du deuxième alésage (22a, 122a) s'étend selon un angle d'environ 90° par rapport à l'axe (B) du premier alésage (21, 121), et
le deuxième alésage (22a, 122a) est raccordé à la chambre de déplacement (3).

2. Pompe selon la revendication 1, **caractérisée en ce que** chaque dispositif d'étanchéité (7, 7', 107, 107') présente un joint de bague (13, 13', 113, 113') avec un ensemble d'étanchéité (14, 114, 114').

3. Pompe selon la revendication 2, **caractérisée en ce que** le joint de bague (13) comprend un joint de presse-étoupe (13a) avec une garniture (14a).

4. Pompe selon la revendication 2, **caractérisée en ce que** le joint de bague (113, 113') comprend un joint de col de toit (113b, 113b') avec un jeu de col de toit (114b, 114b').

5. Pompe selon l'une des revendications 1 à 4, **caractérisée en ce que** le compensateur de dilatation (5, 105) provoque un changement d'environ 90° du sens d'écoulement principal du liquide pendulaire (4a).

6. Pompe selon l'une des revendications 1 à 5, **caractérisée en ce que** chaque dispositif d'étanchéité (7, 7', 107, 107') comprend un joint de bague (13, 13', 113, 113') avec un ensemble d'étanchéité (14, 114, 114'), et les moyens d'étanchéité (17, 117, 117') comprennent au moins une zone (24, 124, 124') avec un diamètre intérieur agrandi du premier alésage (21, 121) dans lequel l'ensemble d'étanchéité (14, 114, 114') est disposé et dont l'extrémité fournit, dans chaque cas, un épaulement (25, 125, 125') pour l'ensemble d'étanchéité (14, 114, 114').

7. Pompe selon l'une des revendications 1 à 6, **caractérisée en ce que** l'élément déplaçable (18, 118) présente une zone de guidage (55, 155) dont le diamètre extérieur est légèrement inférieur au diamètre intérieur du premier alésage (21, 121), et un alésage longitudinal (56, 156), ainsi qu'un alésage transversal (30, 130), et l'alésage transversal (30, 130) étant aligné avec le deuxième alésage (22a, 122a) du boîtier.

8. Pompe selon l'une des revendications 1 à 7, **caractérisée en ce que** deux dispositifs d'étanchéité (7, 7', 107, 107') sont pourvus, chacun ayant un joint de bague (13, 13', 113, 113') avec un ensemble de joints (14, 114, 114'), et l'élément déplaçable (8, 108) est guidé de manière flottante dans ce joint à double bague (13, 113, 113') dans le compensateur de dilatation (5, 105).

9. Pompe selon l'une des revendications 1 à 8, **caractérisée en ce qu'un** dispositif de déplacement de ligne pendulaire est prévu pour déplacer la ligne pendulaire à des fins de maintenance.
